# EUROPEAN PATENT SPECIFICATION

(11) **EP 1 396 984 B1**
(45) Date of publication and mention of the grant of the patent: **05.03.2014**
(21) Application number: 02019921.2
(22) Date of filing: 04.09.2002
(51) Int. Cl.: H04M 1/247, G06F 3/023, H04M 1/725

(54) **User interface for a mobile communication device**
Benutzerschnittstelle für ein mobiles Telekommunikationsendgerät
Interface utilisateur pour un terminal de télécommunication mobile

(43) Date of publication of application: 10.03.2004
(73) Proprietor: Hewlett-Packard Development Company, L.P., Houston, TX 77707 (US)
(72) Inventor: Ihle, Marc, Dr., 89077 Ulm (DE); Santa Cruz Roldan, Carmen, 9000 Denmark (DK)
(74) Representative: Potter, Julian Mark

(56) References cited:
- EP-A- 0 887 988
- EP-A- 0 901 263
- EP-A- 1 079 584
- WO-A-02/11329
- WO-A-02/51185
- DE-A- 10 022 588
- DE-U- 20 103 009
- DE-U- 20 115 776
- FR-A- 2 761 219
- US-A- 5 910 882
- US-A1- 2001 056 364
- US-A1- 2002 090 973

## Description

The invention relates to a mobile communication device and a method for operating a mobile communication device.

Electronic pets, e.g. Tamagochis (TM), are getting more and more popular. Especially teenagers like the behavior of a pet to be simulated by an electronic device. Until now, the behavior of electronic pets was controlled by an engine that only took into account the success of the owner of the electronic pet to fulfill a number of predefined tasks, e.g. feed, clean, or play a specific game. However, the abilities of known electronic pets are limited so that the enthusiasm for engaging with the electronic pet very soon fades. Moreover, known electronic pets are separate devices that can not realize any further functions. Therefore, such devices have to be carried around separately.

Avatars are employed to represent the user in video-games and chat rooms. Avatars are also known to represent salespersons in virtual internet shops. However, the profile of known avatars is limited to a predefined appearance and behavior as selected by the user. This appearance does not change, regardless of conditions like e.g. duration, result of a game or the environmental conditions that take place when a game is played.

The cover of a mobile phone is a static part of the mobile device with limited personalization capabilities. However, being the most visible part of the device, it is the best way for the users to make a personal statement about themselves and the way of like they favor. The current efforts of mobile device manufactures involve the use of easily detachable covers that are either mass produced or in another way customized with art provided by the final user (e.g. pictures).

Even in the latter case, the choices are limited to only one possibility that might not be suitable for all moods of the user, or all situations. In view of this limitation, some mobile device manufactures decided to add a photography holder to the back of the device. However, this approach is not very flexible. In addition, a detachable cover can only be used with a specific mobile device. Therefore, if the user intends to change the device at a later time, he/she needs to discard the old covers and buy new ones.
EP1079584 relates to a cover comprising electronic ink.

An object of the invention is to create a known mobile device which may act as an electronic pet and/or avatar, and which benefits from the mobility and information obtained by being hosted in a mobile device.

Another object of the invention is to provide a method for operating a known mobile device that enables the device to act as an electronic pet and/or avatar benefiting from the mobility and information obtained by being hosted in a mobile device.

The first object is solved by a mobile communication device comprising the features of claim 1, and the second object is solved by a method for operating a mobile communication device comprising the features of claim 18. The dependent claims represent preferred and advantageous embodiments of the present invention.

The mobile communication device comprises
- means for recognizing external effects on the communication device,
- means for storing data related to the recognized external effects,
- means for initiating at least one action in the communication device, and
- means for processing the stored data, whereby the at least one action is initiated depending on the stored data.

External effects in the meaning of the invention are all physical effects and forces which may be detected in the mobile communication device like for example typing a key, voice input, positioning information etc. The mobile communication device is preferably a mobile phone, however, may also be any similar portable device, for example a personal digital assistant.

In a preferred embodiment, the external effects comprise the user-behavior of the user of the communication device. The user-behavior may be presented by the type of applications on the mobile communication device utilized by the user, the frequency of use of some type of applications and/or the mood of the user at a given point, e.g. represented by the typing style (fast, strong), the tone of voice, the speed of speech, etc.

In another embodiment, the means for recognizing external effects comprise at least one separate sensor. The mobile communication device may be equipped with different types of sensors, which will make the device aware of environmental external conditions, e.g. light, temperature, sound/noise, acceleration etc.

In a further embodiment, the at least one action is initiated depending on at least one internal condition of the communication device, e.g. calendar entries. The internal condition may also be determined by sensors and may comprise the conditions low battery, low network coverage, small amount of available memory etc. In this respect, an electronic pet/avatar reacting to the at least one internal condition would act as a more human-like status-indication agent.

In one embodiment of the invention, the external effects comprise the location of the communication device. The location may for example be determined by means of GPS (Global Positioning System), GSM (Global System for Mobile Communications) / UMTS (Universal Mobile Telephone System) based location methods, a Bluetooth Network or the frequency of cell change. For example, the mobile communication device is able to play a certain game level of a game only at predetermined places.

In a still further embodiment of the invention, the at least one action is initiated depending on at least one token element stored in the means for storing. The at least one token element can be received from an external source. Preferably, the at least one token element is broadcasted to the communication device. In one embodiment, the at least one token element comprises an executable code. Changing tokens are elements that might alter the personality/behavioral profile, awareness, -i.e. responsiveness to external effects and internal conditions-, the type of conditions affecting the device, appearance and activities to be performed by/with the device. A token element can be delivered as a parameter or as an executable code, e.g. a java (TM) middlet that patches and modifies the device. Broadcasting the token element means that the token element is submitted to the device in an unrequested manner, e.g. by a cell broadcast service. The token elements may for example be obtained at certain places (e.g. some shops as promotional items), by having or using certain mobile services, by using specific applications or by performing certain activities (e.g. combination of activities in the phone, biking/walking for a given time or distance).

In a still further embodiment, the at least one action comprises at least one alteration on the display of the communication device. The display alteration may be for example a certain screensaver depending on the detected surrounding. noise, a face showing a smile or an avatar/electronic pet showing a certain gesture.

In another embodiment of the invention, at least a part of the cover of the mobile communication'device alters depending on said at least one action. This part of the cover may be a separate display (with or without the possibility to flex around the device) or may also be combined with other displays (i.e. the main display of the device and/or other secondary displays) conforming a modular display arrangement encircling the device. Consequently, the cover-display may also conform to a tri-dimensional display arrangement. This arrangement will need to be taken into account by the rendering element in order represent the pictorial elements correctly.

Preferably, this at least part of the cover of the mobile communication device comprises an electronic ink film and/or an electronic paper. An electronic ink film consists of millions of tiny microcapsules. In one status, each microcapsule contains positively charged white particles and negatively charged black particles suspended in a clear fluid. When a negative electric field is applied, the white particles move to the top of the microcapsule where they become visible. This makes the surface appear white at that spot. At the same time, an opposite electric field pulls the black particles to the bottom of the microcapsules where they are hidden. By reversing this process, the black particles appear at the top of the capsule, which makes the surface appear dark at that spot. The electronic ink film may be printed onto a sheet of plastic film that is laminated to a layer of circuitry. The circuitry forms a pattern of pixels that can be controlled by a display driver. Electronic paper is a thin layer of transparent plastic in which millions of small beads are randomly dispersed. The beads, each contained in an oil-filled cavity, are free to rotate within those cavities. The beads have two colors, and are charged as electrical dipoles. When a voltage is applied to the surface of the sheet, the beads rotate. Since the electronic ink film and the electronic paper are flexible, they are suitable for being adapted to the shapes of different devices. Furthermore, the battery consumption of electronic ink film and electronic paper is very small. Once the information is written in the display, the information stays there until a new voltage is applied.

In a preferred embodiment, the means for initiating at least one action comprise a computer program. The computer program may control the voltage supplied to the electronic ink film and/or electronic paper so that displaying different pictorial compositions on the cover is possible. Depending on the recognized external effects, the displayed pictorial compositions (displayed on at least some parts of the cover) of the mobile communication device may change.

The computer program may be downloaded to the mobile communication device, e.g. by use of MMS (Multimedia Messaging Service). The engines of the electronic pet and its "changing tokens" or soft-cover modules and pictorial compositions ("soft-covers") can be delivered using MMS. Although, in the case of "changing tokens" and "soft-covers", it might be necessary to employ (and thus register) specific electronic pet and soft-cover MIME (multi purpose internet mail extensions) types. The computer program might also be downloaded locally (e.g. by a Bluetooth network, which initially does not require the use of MMS). The computer program (i.e. soft-cover modules and electronic pet engines) is preferably based on java (TM) technology. Java is a programming language designed for use in the distributed environment of the Internet and enforces an object-oriented programming model. Java can be used to create complete applications that may run on a single computer or be distributed among servers and clients in a network. It can also be used to build a small application module or applet. The computer program may comprise a core module and a configuration module. The core module may handle rendering of the pictorial compositions (e.g. three-dimensional views for tri-dimensional display arrangements) on at least one part of the cover of the mobile communication device. The configuration module enables the computer program to adapt to the geometrical characteristic of the at least parts of the cover of the particular mobile communication device. Furthermore, the configuration module may use downloadable descriptors of the mobile communication devices in order to permit portability of the pictorial compositions across different devices. Alternatively, a pictorial composition can be downloaded which is already customized for a given mobile communication device.

The invention also relates to a soft-cover and a soft-cover application. Differences exist between the soft-cover applications (which execute, handle and manipulate the soft-covers) and soft-covers. A soft-cover application may comprise a core module, a configuration module, a soft-cover album module, a soft-cover lab, and a soft-cover environmental module. A soft-cover is a scenery to be represented (executed by the soft-cover application) in a cover display of varying geometrical arrangement (e.g. a three-dimensional geometrical arrangement). The cover display may be integrated in the physical cover of the mobile device. The scenery portrait by the soft-cover comprises diverse pictorial elements of static (pictures) and/or dynamic (animations) nature. The scenery may change according to the settings and mode of use (e.g. external effects, internal conditions).

The computer program, i.e. soft-cover application, may optionally comprise an album module, a lab module and/or an environmental module. The album module permits to access a collection of different pictorial compositions for the at least parts of the cover of the mobile communication device. For example, on the 1^{st} of February, a birthday cover is displayed and on February 15^{th}, a valentine's cover is shown. The birthday information can be obtained from the calendar of the mobile communication device. The lab module allows the user of the device to convert photographs or pictures in a format to be displayed on the part of the cover-display of the mobile communication device. Moreover, the elements to be displayed and their position on the part of the cover-display can be defined. Finally, the environmental module allows the soft-cover application to react on external effects and internal conditions.

The invention may employ the mobility and information obtained from the mobile device to change the quality of a displayed pictorial scenery and thus, alter the complete appearance of the mobile device. The pictorial composition (or scenery) might be composed of at least one pictorial entity of static (picture) or dynamic (animation) nature. The modification of the pictorial information shown on the display is preferably one of two types:
(a) substitution of a pictorial composition for another one; or
(b) alteration of a pictorial composition, made of several pictorial entities by changing the presence, appearance or behavior of the individual pictorial entities.

The at least one action may also comprise at least one acoustic signal. Preferably, the type and/or loudness and/or sound of the at least one acoustic signal is changed depending on the stored data. Moreover, the acoustic signal may be adjusted to environmental noise situation. For example, a louder acoustic signal is played in a night club than in a museum.

The at least one action may also comprise a tactile actuation. The vibration pattern (as executed by means of a trembler or a loud-speaker, for instance) and the intensity applied might change depending on stored data. The tactile actuation might also comprise a small change of the temperature of the cover or electrical stimulation supplied in a given location of the mobile device.

The at least one action may also comprise an olfactory emission. The type of scent generated is changed depending on the stored data.

In the method for operating a mobile communication device,
- the external effects on the communication device are recognized,
- the data related to the recognized external effects is stored,
- the at least one action is initiated in the communication device,
- the stored data is processed and
- the at least one action is initiated depending on the stored data.

The invention also relates to a method for operating a three-dimensional display integrated in the cover of a mobile device.

The invention further relates to a method for describing the position of the entities of a pictorial composition in a coherent way according to the geometrical characteristics of a cover display (with or without three-dimensional geometrical arrangement).

Moreover, the invention relates to a method for using a set of geometrical parameters for adapting pictorial compositions to the different shapes and sizes of a three-dimensional display.

Furthermore, the invention relates to a method for enhancing the operation of a mobile device (e.g. back-light, background, sound, trembler, etc.).

By means of the invention, the concept of an electronic pet departs from the known notion. In the present invention, an electronic pet might start from an elemental core-engine of predefined behavioral and awareness profile (adjusted to the user; e.g. a sporty electronic pet) and evolve according to occurrence and performance on activities that are relevant to the user (e.g. bike a certain amount of kilometers while using the sensors of the mobile device as a bike computer). In this respect, the invention may also act as a support program (with human-like behavior) having the ability to engage the user in difficult tasks (e.g. memory exercises, work out, quit smoking). The electronic pet can reflect the advances of the user in a visible and descriptive way, e.g. by getting more skills, or changing its appearance.

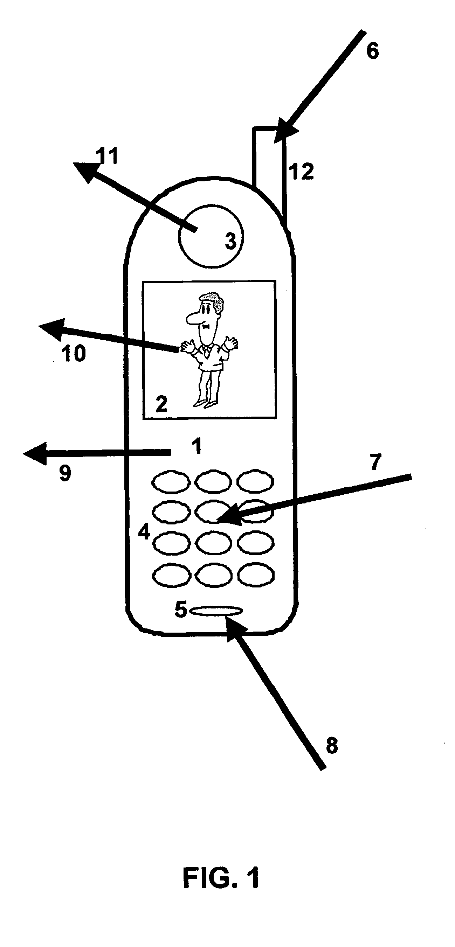

The invention is described in more detail below with reference to the enclosed drawing, in which
- Figure 1: shows a schematic diagram of a mobile phone.

In Figure 1, an example of the present invention is shown. The shown mobile phone comprises a keyboard 4, a microphone 5, a loudspeaker 3, a display 2, an antenna 12 and a detachable cover 1. The detachable cover 1 comprises an electronic ink film. A user of the mobile phone types 7 on the keyboard 4 with a certain speed and force and speaks 8 into the microphone 5 with a certain noise and tone. Moreover positioning information of the mobile phone 6 is obtained via the antenna 12. All this external information is detected by and stored in the mobile phone. The stored information is processed by a microprocessor (not shown), and certain actions are initiated depending on that information. For example, the loudspeaker 3 plays 11 a certain song if the user-behavior continuously indicates bad mood of the user. By means of the positioning information 6, the location of the mobile phone can be determined. Depending on this information, if the user is working at his place of employment, the cover displays a "business style" cover. If the mobile phone is outside the place of employment, the cover changes to a "holiday-motive".

In another example, the display 2 shows 10 an avatar or the cover displays a certain animation if a certain shop is entered for the second time. In a further example, when located in a shop, a java-applet is automatically downloaded to the mobile phone. The java applet controls the cover display 1 and initiates it to show a certain advertising of the shop. When the mobile phone is located outside the shop, the default motive is again shown on the cover 1.

In another example, an electronic pet evolves by playing a game that involves at least one user. The electronic pet might play on behalf of the user against another electronic pet by using the skills accumulated during its evolution. Thus, the electronic pet takes over the role of an avatar. The skills (its appearance, changing capabilities and awareness) are modified by means of events of internal (e.g. internal status of the phone, resident application status) or external nature (e.g. environmental exposure by external sensors and changing tokens). The sensors collect information regarding the surrounding conditions in relation to the mobile device (e.g. light, location, temperature, background noise, acceleration, etc.). Furthermore, the sensors may collect information regarding interaction of the user (e.g. typing speed, typing pressure, speech loudness, bandwidth usage, holding pressure, hand temperature, hand humidity, etc.), thus deriving behavioral information of the user. The electronic pet behaves accordingly.

## Claims

1. A mobile communication device comprising:
means (4, 5, 12) for recognizing external effects on said communication device,
means for storing data related to said recognized external effects comprising the user behaviour and the location of the device;
means for initiating at least one action (9, 10, 11) in said communication device, and
means for processing said stored data, whereby said at least one action is initiated depending on said stored data and at least a part of a display of the mobile communication device is arranged to alter depending on said at least one action,
wherein said at least part of the display comprises at least one of an electronic ink film and a sheet of electronic paper.

2. A mobile communication device according to claim 1,
**characterized in that**
said means for recognizing external effects comprise at least one separate sensor.

3. A mobile communication device according to any of claims 1 or 2,
**characterized in that**
said at least one action is initiated depending on at least one internal condition of said communication device.

4. A mobile communication device according to any of claims 1 to 3,
**characterized in that**
said at least one action is initiated depending on at least one token element stored in said means for storing.

5. A mobile communication device according to claim 4,
**characterized in that**
said at least one token element can be received from an external source.

6. A mobile communication device according to claim 5,
**characterized in that**
said at least one token element is broadcasted to said communication device.

7. A mobile communication device according to any of claims 5 or 6,
**characterized in that**
said at least one token element comprises an executable code.

8. A mobile communication device according to any of claims 1 to 7,
**characterized in that**
said at least one action comprises at least one alteration on the display of said communication device.

9. A mobile communication device according to any of claims 1 to 8,
**characterized in that**
said means for initiating at least one action comprise a computer program.

10. A mobile communication device according to any of claims 1 to 9,
**characterized in that**
said at least one action comprises at least one acoustic signal.

11. A mobile communication device according to any of claims 1 to 9,
**characterized in that**
said at least one action comprises at least one tactile stimulus.

12. A mobile communication device according to any of claims 1 to 9,
**characterized in that**
said at least one action comprises at least one olfactory emission.

13. A mobile communication device according to claim 10,
**characterized in that**
the type and/or loudness and/or sound of said at least one acoustic signal is changed depending on said stored data.

14. A method for operating a mobile communication device in which
external effects on said communication (6, 7, 8) device are recognized,
data related to said recognized external effects comprising the user behaviour and the location of the device is stored,
at least one action (9, 10, 11) is initiated in said communication device, and
said stored data is processed and said at least one action is initiated depending on said stored data and at least a part of a display of the mobile communication device alters depending on said at least one action, wherein the display alters by means of at least one of an electronic ink film and a sheet of electronic paper.

15. A method according to claim 14,
**characterized in that**
said at least one action is initiated depending on at least one internal condition of said communication device.

16. A method according to any of claims 14 to 15,
**characterized in that**
said at least one action is initiated depending on at least one token element stored in a means for storing.

17. A method according to previous claim 16,
**characterized in that**
said at least one token element can be received from an external source.

18. A method according to any of claims 16 or 17,
**characterized in that**
said at least one token element is broadcasted to said communication device.

19. A method according to any of claims 16 to 17,
**characterized in that**
said at least one token element comprises an executable code.

20. A method according to any of claims 14 to 19,
**characterized in that**
said at least one action comprises at least one alteration on the display of said communication device.

21. A method according to any of claims 14 to 20,
**characterized in that**
said at least one action is initiated by a computer program.

22. A method according to any of claims 14 to 20,
**characterized in that**
said at least one action comprises at least one acoustic signal.

23. A method according to any of claims 14 to 20,
**characterized in that**
said at least one action comprises at least one tactile stimulus.

24. A method according to any of claims 14 to 22,
**characterized in that**
said at least one action comprises at least one olfactory emission.

25. A method according to claim 22,
**characterized in that**
the type and/or loudness and/or sound of said at least one acoustic signal is changed depending on said stored data.

26. A soft-cover application suitable to be used in mobile communication device according any of the previous claims 1 - 13 and/or suitable to be used with a method according any of the previous claims 14 - 25.

## Patentansprüche

1. Mobile Kommunikationsvorrichtung, umfassend:
- Mittel (4, 5, 12) zum Erkennen äußerer Einflüsse auf die Kommunikationsvorrichtung,
- Mittel zum Speichern von Daten mit Bezug auf die erkannten äußeren Einflüsse, umfassend das Benutzerverhalten und den Standort der Vorrichtung;
- Mittel zum Auslösen mindestens einer Maßnahme (9, 10, 11) in der Kommunikationsvorrichtung, und
- Mittel zum Verarbeiten der gespeicherten Daten, wodurch die mindestens eine Maßnahme in Abhängigkeit von den gespeicherten Daten ausgelöst wird und mindestens ein Teil einer Anzeige der mobilen Kommunikationsvorrichtung angeordnet ist, um sich in Abhängigkeit von der mindestens einen Maßnahme zu ändern, wobei der mindestens eine Teil der Anzeige mindestens eines von einer elektronischen Tintenfolie und einem Blatt elektronischen Papiers umfasst.

2. Mobile Kommunikationsvorrichtung nach Anspruch 1, **dadurch gekennzeichnet, dass** die Mittel zum Erkennen äußerer Einflüsse mindestens einen getrennten Sensor umfassen.

3. Mobile Kommunikationsvorrichtung nach einem der Ansprüche 1 oder 2, **dadurch gekennzeichnet, dass** die mindestens eine Maßnahme in Abhängigkeit von mindestens einem internen Zustand der Kommunikationsvorrichtung ausgelöst wird.

4. Mobile Kommunikationsvorrichtung nach einem der Ansprüche 1 bis 3, **dadurch gekennzeichnet, dass** die mindestens eine Maßnahme in Abhängigkeit von mindestens einem Token-Element ausgelöst wird, das in den Speichermitteln gespeichert ist.

5. Mobile Kommunikationsvorrichtung nach Anspruch 4, **dadurch gekennzeichnet, dass** das mindestens eine Token-Element aus einer äußeren Quelle empfangen werden kann.

6. Mobile Kommunikationsvorrichtung nach Anspruch 5, **dadurch gekennzeichnet, dass** das mindestens eine Token-Element an die Kommunikationsvorrichtung übertragen wird.

7. Mobile Kommunikationsvorrichtung nach einem der Ansprüche 5 oder 6, **dadurch gekennzeichnet, dass** das mindestens eine Token-Element ausführbaren Code umfasst.

8. Mobile Kommunikationsvorrichtung nach einem der Ansprüche 1 bis 7, **dadurch gekennzeichnet, dass** die mindestens eine Maßnahme mindestens eine Änderung an der Anzeige der Kommunikationsvorrichtung umfasst.

9. Mobile Kommunikationsvorrichtung nach einem der Ansprüche 1 bis 8, **dadurch gekennzeichnet, dass** die Mittel zum Auslösen mindestens einer Maßnahme ein Computerprogramm umfassen.

10. Mobile Kommunikationsvorrichtung nach einem der Ansprüche 1 bis 9, **dadurch gekennzeichnet, dass** die mindestens eine Maßnahme mindestens ein akustisches Signal umfasst.

11. Mobile Kommunikationsvorrichtung nach einem der Ansprüche 1 bis 9, **dadurch gekennzeichnet, dass** die mindestens eine Maßnahme mindestens einen Tastreiz umfasst.

12. Mobile Kommunikationsvorrichtung nach einem der Ansprüche 1 bis 9, **dadurch gekennzeichnet, dass** die mindestens eine Maßnahme mindestens eine Geruchsausströmung umfasst.

13. Mobile Kommunikationsvorrichtung nach Anspruch 10, **dadurch gekennzeichnet, dass** die Art und/oder die Lautstärke und/oder der Ton des mindestens einen akustischen Signals in Abhängigkeit von den gespeicherten Daten geändert wird bzw. werden.

14. Verfahren zum Betätigen einer mobilen Kommunikationsvorrichtung, wobei
- äußere Einflüsse auf die Kommunikationsvorrichtung (6, 7, 8) erkannt werden,
- Daten mit Bezug auf die erkannten äußeren Einflüsse, umfassend das Benutzerverhalten und den Standort der Vorrichtung, gespeichert werden,
- mindestens eine Maßnahme (9, 10, 11) in der Kommunikationsvorrichtung ausgelöst wird, und
- die gespeicherten Daten verarbeitet werden und die mindestens eine Maßnahme in Abhängigkeit von den gespeicherten Daten ausgelöst wird und sich mindestens ein Teil der Anzeige der mobilen Kommunikationsvorrichtung in Abhängigkeit von der mindestens einen Maßnahme ändert, wobei sich die Anzeige anhand mindestens eines von einer elektronischen Tintenfolie und einem Blatt elektronischen Papiers ändert.

15. Verfahren nach Anspruch 14, **dadurch gekennzeichnet, dass** die mindestens eine Maßnahme in Abhängigkeit von mindestens einem internen Zustand der Kommunikationsvorrichtung ausgelöst wird.

16. Verfahren nach einem der Ansprüche 14 bis 15, **dadurch gekennzeichnet, dass** die mindestens eine Maßnahme in Abhängigkeit von mindestens einem Token-Element ausgelöst wird, das in einem Speichermittel gespeichert ist.

17. Verfahren nach dem vorhergehenden Anspruch 16, **dadurch gekennzeichnet, dass** das mindestens eine Token-Element aus einer äußeren Quelle empfangen werden kann.

18. Verfahren nach einem der Ansprüche 16 oder 17, **dadurch gekennzeichnet, dass** das mindestens eine Token-Element an die Kommunikationsvorrichtung übertragen wird.

19. Verfahren nach einem der Ansprüche 16 bis 17, **dadurch gekennzeichnet, dass** das mindestens eine Token-Element ausführbaren Code umfasst.

20. Verfahren nach einem der Ansprüche 14 bis 19, **dadurch gekennzeichnet, dass** die mindestens eine Maßnahme mindestens eine Änderung an der Anzeige der Kommunikationsvorrichtung umfasst.

21. Verfahren nach einem der Ansprüche 14 bis 20, **dadurch gekennzeichnet, dass** die mindestens eine Maßnahme durch ein Computerprogramm ausgelöst wird.

22. Verfahren nach einem der Ansprüche 14 bis 20, **dadurch gekennzeichnet, dass** die mindestens eine Maßnahme mindestens ein akustisches Signal umfasst.

23. Verfahren nach einem der Ansprüche 14 bis 20, **dadurch gekennzeichnet, dass** die mindestens eine Maßnahme mindestens einen Tastreiz umfasst.

24. Verfahren nach einem der Ansprüche 14 bis 22, **dadurch gekennzeichnet, dass** die mindestens eine Maßnahme mindestens eine Geruchsausströmung umfasst.

25. Verfahren nach Anspruch 22, **dadurch gekennzeichnet, dass** der Typ und/oder die Lautstärke und/oder der Ton des mindestens einen akustischen Signals in Abhängigkeit von den gespeicherten Daten geändert wird bzw. werden.

26. Funktionshüllenanwendung, geeignet zur Verwendung bei einer mobilen Kommunikationsvorrichtung nach einem der vorhergehenden Ansprüche 1 bis 13 und/oder geeignet zur Verwendung mit einem Verfahren nach einem der vorhergehenden Ansprüche 14 bis 25.

## Revendications

1. Dispositif de communication mobile comprenant :
des moyens (4, 5, 12) pour reconnaître des effets externes sur ledit dispositif de communication,
des moyens pour stocker des données associées auxdits effets externes reconnus comprenant le comportement d'utilisateur et la localisation du dispositif ;
des moyens pour initier au moins une action (9, 10, 11) dans ledit dispositif de communication, et
des moyens pour traiter lesdites données stockées, ce par quoi ladite ou lesdites actions sont initiées en fonction desdites données stockées et au moins une partie d'un affichage du dispositif de communication mobile est agencé pour s'altérer en fonction de ladite ou desdites actions,
ladite ou lesdites parties de l'affichage comprenant au moins l'un d'un film d'encre électronique et d'une feuille de papier électronique.

2. Dispositif de communication mobile selon la revendication 1,
**caractérisé par le fait que**
lesdits moyens pour reconnaître des effets externes comprennent au moins un capteur séparé.

3. Dispositif de communication mobile selon l'une quelconque des revendications 1 ou 2,
**caractérisé par le fait que**
ladite ou lesdites actions sont initiées en fonction d'au moins un état interne dudit dispositif de communication.

4. Dispositif de communication mobile selon l'une quelconque des revendications 1 à 3,
**caractérisé par le fait que**
ladite ou lesdites actions sont initiées en fonction d'au moins un élément de jeton stocké dans lesdits moyens de stockage.

5. Dispositif de communication mobile selon la revendication 4,
**caractérisé par le fait que**
ledit ou lesdits éléments de jeton peuvent être reçus à partir d'une source externe.

6. Dispositif de communication mobile selon la revendication 5,
**caractérisé par le fait que**
ledit ou lesdits éléments de jeton sont diffusés audit dispositif de communication.

7. Dispositif de communication mobile selon l'une quelconque des revendications 5 ou 6,
**caractérisé par le fait que**
ledit ou lesdits éléments de jeton comprennent un code exécutable.

8. Dispositif de communication mobile selon l'une quelconque des revendications 1 à 7,
**caractérisé par le fait que**
ladite ou lesdites actions comprennent au moins une altération sur l'affichage dudit dispositif de communication.

9. Dispositif de communication mobile selon l'une quelconque des revendications 1 à 8,
**caractérisé par le fait que**
lesdits moyens pour initier au moins une action comprennent un programme d'ordinateur.

10. Dispositif de communication mobile selon l'une quelconque des revendications 1 à 9,
**caractérisé par le fait que**
ladite ou lesdites actions comprennent au moins un signal acoustique.

11. Dispositif de communication mobile selon l'une quelconque des revendications 1 à 9,
**caractérisé par le fait que**
ladite ou lesdites actions comprennent au moins un stimulus tactile.

12. Dispositif de communication mobile selon l'une quelconque des revendications 1 à 9,
**caractérisé par le fait que**
ladite ou lesdites actions comprennent au moins une émission olfactive.

13. Dispositif de communication mobile selon la revendication 10,
**caractérisé par le fait que**
le type et/ou la sonie et/ou le son dudit ou desdits signaux acoustiques sont changés en fonction desdites données stockées.

14. Procédé de fonctionnement d'un dispositif de communication mobile dans lequel
des effets externes sur ledit dispositif de communication (6, 7, 8) sont reconnus,
des données associées auxdits effets externes reconnus comprenant le comportement d'utilisateur et la localisation du dispositif sont stockées,
au moins une action (9, 10, 11) est initiée dans ledit dispositif de communication, et lesdites données stockées sont traitées et ladite ou lesdites actions sont initiées en fonction desdites données stockées et au moins une partie d'un affichage du dispositif de communication mobile s'altère en fonction de ladite ou desdites actions, l'affichage s'altérant au moyen d'au moins l'un d'un film d'encre électronique et d'une feuille de papier électronique.

15. Procédé selon la revendication 14,
**caractérisé par le fait que**
ladite ou lesdites actions sont initiées en fonction d'au moins un état interne dudit dispositif de communication.

16. Procédé selon l'une quelconque des revendications 14 à 15,
**caractérisé par le fait que**
ladite ou lesdites actions sont initiées en fonction d'au moins un élément de jeton stocké dans des moyens de stockage.

17. Procédé selon la revendication précédente 16,
**caractérisé par le fait que**
ledit ou lesdits éléments de jeton peuvent être reçus à partir d'une source externe.

18. Procédé selon l'une quelconque des revendications 16 ou 17,
**caractérisé par le fait que**
ledit ou lesdits éléments de jeton sont diffusés audit dispositif de communication.

19. Procédé selon l'une quelconque des revendications 16 à 17,
**caractérisé par le fait que**
ledit ou lesdits éléments de jeton comprennent un code exécutable.

20. Procédé selon l'une quelconque des revendications 14 à 19,
**caractérisé par le fait que**
ladite ou lesdites actions comprennent au moins une altération sur l'affichage dudit dispositif de communication.

21. Procédé selon l'une quelconque des revendications 14 à 20,
**caractérisé par le fait que**
ladite ou lesdites actions sont initiées par un programme d'ordinateur.

22. Procédé selon l'une quelconque des revendications 14 à 20,
**caractérisé par le fait que**
ladite ou lesdites actions comprennent au moins un signal acoustique.

23. Procédé selon l'une quelconque des revendications 14 à 20,
**caractérisé par le fait que**
ladite ou lesdites actions comprennent au moins un stimulus tactile.

24. Procédé selon l'une quelconque des revendications 14 à 22,
**caractérisé par le fait que**
ladite ou lesdites actions comprennent au moins une émission olfactive.

25. Procédé selon la revendication 22,
**caractérisé par le fait que**
le type et/ou la sonie et/ou le son dudit ou desdits signaux acoustiques sont changés en fonction desdites données stockées.

26. Application d'habillage logiciel appropriée pour être utilisée dans un dispositif de communication mobile selon l'une quelconque des revendications précédentes 1-13 et/ou appropriée pour être utilisée avec un procédé selon l'une quelconque des revendications précédentes 14- 25.
